Europäisches Patentamt

European Patent Office

Office européen des brevets

(19)

(11) Publication number: **0 330 403**
**A2**

## (12) EUROPEAN PATENT APPLICATION

(21) Application number: **89301619.6**

(22) Date of filing: **20.02.89**

(51) Int. Cl.⁴: **B29C 59/04 , B29D 15/00**

(30) Priority: **24.02.88 JP 41230/88**

(43) Date of publication of application:
**30.08.89 Bulletin 89/35**

(84) Designated Contracting States:
**AT BE CH DE ES FR GB GR IT LI LU NL SE**

(71) Applicant: **POLYPLASTICS CO. LTD.**
**30, Azuchimachi 2-chome**
**Higashi-ku Osaka-shi Osaka(JP)**

(72) Inventor: **Tanimoto, Shigekazu**
**25-8, Miyashita -**
**Fuji-shi Shizuoka(JP)**
Inventor: **Nakamura, Toshiaki**
**324, Miyashita**
**Fuji-shi Shizuoka(JP)**
Inventor: **Satoh, Katsuyoshi**
**885-11, Miyajima**
**Fuji-shi Shizuoka(JP)**

(74) Representative: **Jackson, Peter et al**
**HYDE, HEIDE & O'DONNELL 146 Buckingham**
**Palace Road**
**London SW1W 9TR(GB)**

(54) Method of and apparatus for manufacturing racks of thermoplastic resin.

(57) A toothed rack formed from a thermoplastic resin is produced by heating a rod of the thermoplastic resin so that the temperature of at least the surface of said rod does not exceed the melting point T of the resin and the temperature of the inner portion of the rod is generally not less than T-20°C, and thereafter forming a rack in one or both surfaces of said rod by a toothed roller and a grooved guide roller which are paired with each other, or a pair of opposed toothed rollers.

EP 0 330 403 A2

## METHOD OF AND APPARATUS FOR MANUFACTURING RACKS OF THERMOPLASTIC RESIN

This invention relates to a method of and an apparatus for manufacturing racks of a thermoplastic resin having high durability and accuracy.

(Prior Art)

A rack of a thermoplastic resin has excellent flexibility as compared with a metallic rack, and is used for certain purposes more advantageously in many respect than a metallic rack. A rack of a thermoplastic resin has come to be utilized widely in these days.

Most of the conventional racks of a thermoplastic resin are obtained by cutting extrusion molded rods or by injection molding. However, manufacturing a rack by cutting a rod of a thermoplastic resin requires a troublesome process in which the valleys (grooves) of the teeth of the rack are formed one by one, and, therefore, causes the manufacturing cost to increase. According to the method of manufacturing a rack of this kind by injection molding, it is difficult to obtain a product of a large length due to the limitations on the manufacturing process including the limitation on the size of a metal mold to be used. Moreover, due to the construction of the metal mold, uneven thermal contraction of the resin necessarily occurs, so that it is very difficult to obtain a rack having uniform properties and dimensional accuracy. A rack of a resin is used in most cases in a place where a flexible rack is required. Such a rack must be so tough that it is not bent even when it is largely deformed. When such deformation occurs, a rack obtained by cutting an extrusion molded rod is broken at a flaw on the surface of the rack which occurs during the cutting operation, and a rack obtained by injection molding at the portion thereof which has uneven properties.

Japanese Patent Laid-Open No. 63418/1983 proposes a method of manufacturing racks by profile extrusion molding, i.e. a method of forming teeth on an extruded resin not yet completely solidified. According to this method, the above-mentioned problems are solved to a considerable extent. However, this method requires special equipment provided with an extruder. Moreover, in order to obtain a product having a predetermined dimensional accuracy, it is necessary that an extrusion step and a rack-forming step be matched finely with each other. It takes much time to set the conditions for carrying out these steps properly, so that this method is not suitable for the small quantity production of multiple type of racks.

In this rack manufacturing method, teeth for a rack are formed in a resin in a molten state, and the resultant product is cooled. Therefore, void tends to occur in the rack, and this method also does not completely meet the requirements for obtaining a rack free from internal defects and having a high durability. Accoridng to this method, usable materials are limited in many cases.

Brief Description of the Drawings:

Figs. 1 and 2 are schematic diagrams showing examples of the rack manufacturing apparatus according to the present invention;

Figs. 3 and 4 are schematic diagrams of examples consisting of these apparatuses, and rod storage tanks (which may serve also as pre-heaters) provided additionally so as to carry out the manufacturing of racks continuously;

Fig. 5 is a schematic diagram showing the meshed condition of a toothed roller and grooved guide roller which are used to form a rack, wherein:

Fig. 5a is a side elevation, and

Fig. 5b is a front elevation; and

Fig. 6 is a schematic diagram of an apparatus used to carry out tests for determining the durability of racks.

The reference numerals used in the Figures indicate components of the apparatus as follows:

1...rod, 2...heater (heater capable of heating a road from the outside thereof, for example, a hot air circulating heater), 2'...heates (microwave heaters), 3...toothed roller, 4...grooved guide roller, 5...take-up rollers, 6...rod storage tank (preheater), 7...air currents controlled to a predetermined temperature.

(Summary of the Invention)

In view of these problems, the inventors of the present invention have earnestly studied the possibility of obtaining of a rack of a resin having high accuracy, durability and toughness with a simple method to discover that this object can be achieved by subjecting a rod of a thermoplastic resin to hot plastic forming under special conditions, and attain the present invention.

Namely, this invention relates to a method of and and apparatus for manufacturing racks of a thermoplastic resin, in which a rod which includes a matrix of a thermoplastic resin is heated, for example by hot air, so that the temperature of at least the outer surface of said rod reaches a level expressed by the equation:

$$T-20\ ^\circ C \leq \text{ temperature of the surface of the rod} < T \qquad (1)$$

(wherein $T$ is the melting point of the matrix resin), or is heated with microwaves so that the temperature of at least the surface said rod does not exceed the melting point $T$ of the matrix resin, a rack being thereafter formed on one or both surfaces of the resultant rod by a toothed roller and a grooved roller which are paired with each other, or two opposed toothed rollers.

The method of and the apparatus for manufacturing racks of a thermoplastic resin according to the present invention will now be described with reference to the drawings.

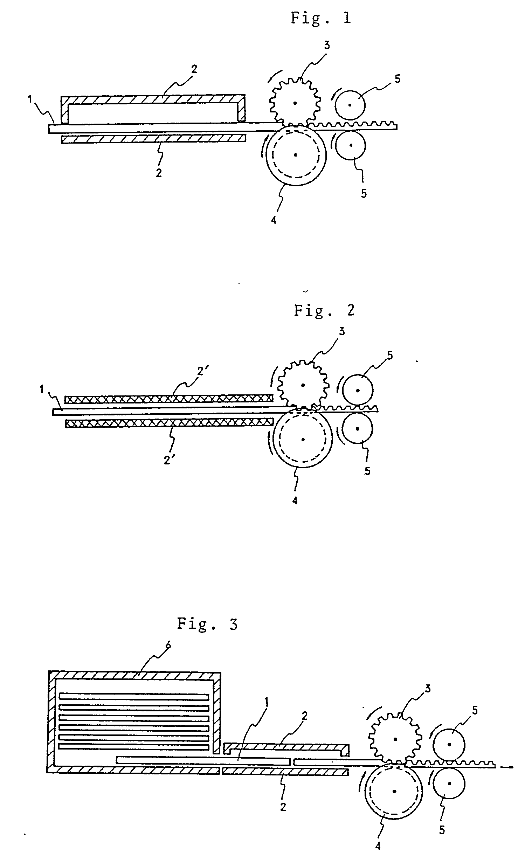

According to the present invention, the manufacturing of a rack of a thermoplastic resin can be carried out by a very simple apparatus shown in, for example, Fig. 1 or 2. The essential parts of the apparatus according to the present invention include only a heater (designated by a reference numeral 2 in Fig. 1, or a reference numeral 2′ in Fig. 2) for heating a thermoplastic resin rod, and a toothed. roller 3 and a grooved guide roller 4 which are paired with each other, or two opposed toothed rollers for forming a rack in the heated rod, i.e., the apparatus having only these parts can sufficiently be put to practical use.

In one method according to the present invention, a rod heater in use consists of a heater 2, which is capable of heating a rod from the outer side (outer surface) thereof as shown in Fig. 1, for example, a hot air circulating heating tank and, in another method according to the present invention, it consists of microwave heaters 2′ adapted to heat a rod from the inside thereof as shown in Fig. 2. Both of these two kinds of heaters, which have different heating modes, are effective. Especially, the microwave heaters are preferably used because they enable a rack having a greatly improved durability to be obtained.

According to the present invention, the manufacturing of racks by such an apparatus is carried out in practice in the following manner: First, a rod of a thermally plastic resin having substantially a desired cross-sectional shape is heated by means of a heater (designated by a reference numeral 2 in Fig. 1 or a reference numeral 2′ in Fig. 2). In the case where the rod is heated by a heater capable of heating the rod from the outer side (outer surface) thereof as shown in Fig. 1, for example, a hot air circulating heating tank 2, the heating is done so that the temperature of at least the outer surface of the rod reaches a level within a range expressed by the equation :

$$T-20\ ^\circ C \leq \text{temperature of the surface of the rod} < T$$

(wherein $T$ is the melting point of a resin forming a matrix for the rod).

When the rod is heated until the temperature of the surface thereof has reached a level not lower than the level represented by $T$, the rod is melted, and deformed by a small force applied thereto, so that the present invention cannot be applied to this case. When this temperature is lower than the level represented by $T-20\ ^\circ C$, a rack is not completely formed. The rod is preferably heated so that the temperature of at least the surface thereof reaches a level within a range expressed by the equation,

$$T-10\ ^\circ C \leq \text{temperature of the surface of the rod} < T$$

(wherein $T$ is the same as in the preceding equation).

Strictly speaking, it is preferable to heat a rod so that the temperature of not only the surface thereof but also the inner portion thereof to which the valleys of the teeth of a rack to be formed extend reaches the above-mentioned level. Since it is difficult to ascertain the temperature of the inner portion fo the resin, such a temperature may be estimated by heat transfer calculation, or the rod may be heated in a heating tank, in which the temperature is set to a level within the above-mentioned range, for a sufficient period of time, for example, 3-5 minutes if the diameter of the rod is around 3-10 mm. If such method are used, the purpose can substantially be met. This heating time can be reduced if the rod is preheated.

In another rod heating method, microwave heaters 2′ are used as shown in Fig. 2, by which a rod is heated from the inside thereof. The microwave heaters, which are generally used in the present invention but not primarily limited to any special microwave heaters, include, for example, microwave heaters of 915 MHz, 2.45 GHz, 5.85 GHz, 10.6 GHz and 18.0 GHz.

Such microwave heaters are adapted to heat the resin rod from the inside thereof, and the temperature of the surface of the rod is not specially limited as long as it is lower than $T$ (defined in a previous paragraph).

The temperature of the inner portion of a rod has a large influence upon the formation of a rack or the

3

performance of a rack obtained. Since measuring the temperature of the inner portion of a rod used to form a rack thereon is substantially impossible, it is preferable to estimate such a temperature by making calculations or determined in advance the relation between the rod heating conditions and the temperature of the inner portion of the rod by using a rod of the same kind provided with a detector.

The inventors of the present invention ascertained by using such methods that the temperature, which enables a rack to be formed, of the inner portion of a rod is expressed by the equation,

$$T-20\,^\circ C \leq \text{temperature of the inner portion of a rod} < T+100\,^\circ C$$

(wherein T is the same as what is defined in a previous paragraph). When the temperature of the inner portion of a rod is lower than $T-20\,^\circ C$, a rack is not completely formed, and, conversely, when this temperature is not lower than $T-100\,^\circ C$, the resin is decomposed and becomes internally defective, so that a rack having a high durability is not obtained. This temperature is preferably:

$$T \leq \text{temperature of the inner portion of a rod} < T+80\,^\circ C,$$

and more preferably:

$$T+3\,^\circ C \leq \text{temperature of the inner portion of a rod} < T+50\,^\circ C.$$

In a practical rack manufacturing operation, a simple method of trial and error may, of course, be used so as to discover more preferable conditions because it is considered that, in the case where a rack having preferable performance is obtained, the temperature of the inner portion of the rod used is necessarily within the above-mentioned ranges. Especially, when a rod consisting of a crystalline resin is used, it can be ascertained with the naked eye that the transparency of the opaque inner portion of the resin (rod) gradually increases as the temperature of the inner portion approaches the level represented by T. Since this phenomenon can be utilized as a yardstick, the preferable rod heating conditions can be determined comparatively easily.

Preheating a rod, for example with hot air, before it is heated with microwaves is preferable because it enables the time for heating the rod with microwaves to be reduced. It is also possible to heat a rod with microwaves in an atmosphere in which temperature is controlled to a predetermined level at which the surface of the rod is not melted.

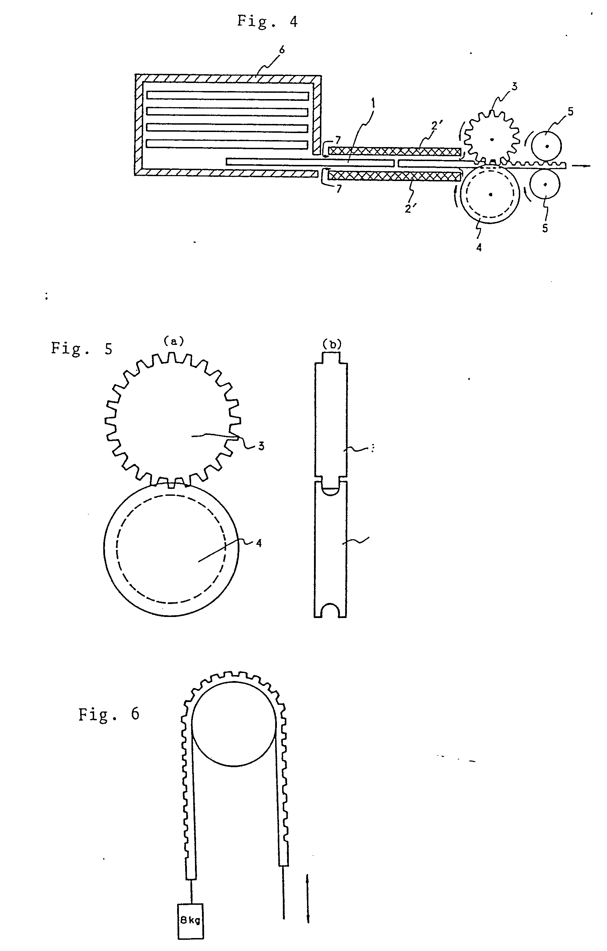

The rod thus heated is then sent to a toothed roller 3 and a grooved guide roller 4 which are paired in an opposed state with each other, and a rack is formed on the surface thereof. These two rollers are meshed as shown in, for example, Fig. 5, and the depth of the valleys of the rack is regulated by varying the depth to which these rollers are meshed. In order to form racks on both surfaces of a rod, paired toothed rollers may be used. If the shapes of the toothed roller and grooved roller are changed, the shape of a rack to be formed can be arbitrarily changed.

According to the present invention, the temperature of these toothed roller and grooved roller is not specially limited. In order to prevent the resin from being cooled suddenly by the toothed roller during the formation of a rack and obtain a rack having little strain and excellent durability, it is preferable that the temperature of (the surface of) the toothed roller be set to a level expressed by the equation,

$$T-50\,^\circ C \leq \text{temperature of the surface of the toothed toller} < T \qquad (2)$$

(wherein T is a melting point of a resin forming a matrix for the rod). A specially preferable temperature of the toothed roller is expressed by the equation,

$$T-30\,^\circ C \leq \text{temperature of the surface of the toothed roller} < T$$

(wherein the definition of T is the same as that of T in the equation 2).

The temperature of the grooved guide roller has less influence upon the formation of a rack than that of the toothed roller, and the former temperature may have a wider range than the latter temperature. When there is a large difference between the temperatures of these rollers, there is the possibility that strain occurs in a rack being formed. It is preferable to set the temperatures of both of these rollers to substantially equal level taking ease of controlling the temperatures into consideration. In order to prevent the rod from being deformed by the pressure from the toothed roller during the formation of a rack, the groove in the grooved guide roller should be formed to a cross-sectional shape substantially in agreement with that of the rod.

The method of manufacturing racks of a resin according to the present invention is characterized in that it can be practised easily by using a very simple apparatus and is, moreover, capable of providing a rack having far more excellent durability than a conventional rack of this kind and a high shape accuracy.

It is considered that the following are the reasons why the rack obtained according to the present invention has such excellent durability.

In a conventional method of this kind, in which a resin is melted, extruded in the shape of a rod and then subjected to the formation of a rack thereon with the resin not completely solidified, the molecules of the resin are oriented in the direction in which the resin was extruded, and the anisotropy occurs therein. Moreover, the faults of the rod of a resin, such as residual strain and void are carried over into the rack

4

finally formed. On the other hand, in the method accoridng to the present invention, a rack is formed on a heated rod, so that a kind of annealing effect occurs. Therefore, it is considered that the strain residing in the rod is lessened to enable a rack having fewer faults and excellent durability to be obtained.

In the case where a rack is formed on a rod the inner portion of which is melted by using microwaves, strain hardly occurs in the rod during the formation of a rack. It is considered that this enable a rack having a very high accuracy and a much improved durability to be obtained.

According to the present invention, racks can thus be manufactured by a very simple apparatus, The rack manufacturing apparatus according to the present invention can be provided with various kinds of additional means for the purpose of improving the operation efficiency, and such additional means produce favorable effects in many cases.

For example, providing rack take-up rollers (designated by a reference numeral 5 in Figs. 1 and 2) has a favorable effect in preventing a rack formed from being deformed, and is very advantageous in that the pitch of the teeth of a rack can be adjusted by controlling the take-up speed of the take-up rollers.

In order to manufacture racks continuously, a preheating tank 6 housing a plurality of rods therein and desirably capable of preheating rods can be provided additionally or combined (utitarily)with the heaters referred to above, so as to enable rods to be supplied sequentially by rollers and pistons. The rack manufacturing apparatus according to the present invention can also be used in a suitably inclined state or in a vertically standing state.

As described above, the present invention is characterized by the method of and apparatus for manufacturing racks of a resin, and as long as the rod in use consists of a thermoplastic resin, no special limitation is placed on the kind of the resin or the shape of the rod.

The theremoplastic resins referred to in the present invention include known thermoplastic resins as a matter of course, as well as thermoplastic resins modified by grafting or cross-linking the known thermoplastic resins, mixtures each of which consist of at least two kinds of resins among these thermoplastic resins, and compositions each of which consists of a mixture of any of these resins and known additives, for example, reinforcing materials or inorganic fillers, such as glass fiber and glass flakes, various kinds of stabilizers for preventing the oxidation of the resins and improving the weather resistance and heat resistance thereof, a lubricant, a smoothing agent, a colorant, a nucleus-forming material and a flame retardant. In short, any rod molded out of these materials can be used in the present invention.

A rack can also be formed by the method according to the present invnetion on a rod containing an elongated plate type, rod type, wire type or fiber type metal, inorganic material or polymer in the inner portion thereof, especially, the portion thereof which is in the vicinity of the core section thereof.

The present invention can thus be applied widely to a rod consisting of a thermoplastic resin, and preferably to a rod consisting mainly of a crystalline thermoplastic resin having a melting point and changing greatly in terms of physical properties such as fluidity across the melting point, these kinds of rods being advantageous in that the temperatures thereof can be controlled finely with reference to their melting points as the standard temperatures. Especially, the present invention is very effective in manufacturing racks by using a rod consisting mainly of polyacetal, polybutylene terephthalate, polyamide, polypropylene and polyethylene which have moderate melting points, and which can be controlled easily with respect to the temperature at which they are heated.

As is clear from the description and embodiments, the present invention is capable of manufacturing racks of a resin by a very simple apparatus, and used very much suitably as a method of and an apparatus for not only manufacturing racks in large quantities but also manufacturing multiple kinds of racks in small quantities.

The racks obtained according to the present invention have great advantages that they have a high dimensional accuracy and markedly high durability.

(Embodiment)

The present invention will now be described in more details on the basis of the embodiments thereof. The present invention is not limited to these embodiments.

Embodiments 1-5:

A rod (having a diameter of 3.6 mm) consisting of polyacetal copolymer having a melting point of 165°C was heated for ten minutes in a hot air circulating heating tank 2, in which the temperature was set

5

to 160°C or 155°C, in an apparatus shown in Fig. 1. The resultant rod was sent to paired toothed roller 3 and grooved guide roller 4, which were heated to 150°C, 130°C or 100°C to form a rack thereon. The rack was then taken up by take-up rolls 5 to obtain a rack having desired sizes and accuracy. The tempeature of the surface of the rod, which had been subjected to a heating step, was 165°C or 155°C, and it was estimated by calculations that the temperature of the inner portion of the rod reached substantially 160°C and 155°C.

The rack thus obtained was subjected to the evaluation of its durability repeatedly by a method shown in Fig. 6, in which a roller of 10 mm in diameter and a load of 8 kg were used. The results are shown in Table 1.

Comparative Example 1:

The same operation as in Embodiment 1 was carried out with the temperature in the heating tank 2 set to 140°C. However, in this case, a rack having a desired shape could not be formed.

Comparative Example 2:

A rack having substantially the same sizes as the racks of Embodiments 1-5 was formed by a cutting process on a rod the material and shape of which were the same as those of the rods used in Embodiments 1-5, and the durability of the resultant rack was evaluated. The results are shown in Table 1.

Reference Example:

The durability of a rack which was obtained by a conventional method, i.e., by extruding a resin to the shape of a rod, and forming a rack on the not completely solidified resin, and which had substantially the same sizes as the racks of Embodiments 1-5. The results are shown in Table 1.

Embodiments 6-7:

A rod consisting of polyacetal copolymer, which was the same as the rods used in Embodiments 1-5, was heated for five minutes in a heating tank 2' using microwaves of 2.45 GHz and 0.5 kw in the apparatus shown in Fig. 2. A rack was then formed on the rod by paired toothed roller 3 and grooved guide roller 4 which were heated to 150°C to 130°C. The rack was taken up by take-up rollers 5 to obtain a rack having the same sizes as the racks of Embodiments 1-5. The rack thus obtained was subjected to a durability test, the results of which are shown in Table 1. As is clear from this table, the durability of this rack was very high.

Embodiment 8:

A rod consisting of polybutylene terephthalate and having a diameter of 3.5 mm was heated for eight minutes in a heating tank using microwaves of 2.45 GHz and 0.5 kw. A rack was then formed on this rod by paired toothed roller and grooved guide roller which were heated to 190°C. The rack was then taken up by take-up rollers. The results of a durability test carried out for the rack thus obtained are shown in Table 1.

Table 1

| | Rod heating conditions | Temperature of the rods ($^\circ$C) | Durability (number of tests carcied out until the rack was broken) |
|---|---|---|---|
| Embodiment 1 | Circulated hot air, 160$^\circ$ C, 10 minutes | 150 | 4530 |
| " 2 | " | 130 | 4083 |
| " 3 | " | 100 | 2183 |
| " 4 | Circulated hot air 155$^\circ$ C, 10 minutes | 150 | 3265 |
| " 5 | " | 130 | 2749 |
| Comparative Example 1 | Circulated hot air, 140$^\circ$ C, 10 minutes | 150 | --- *3 |
| " 2 *1 | --------- | --- | 247 |
| Reference Example 1 *2 | --------- | --- | 1821 |
| Embodiment 6 | Microwaves, 2.45 GHz, 0.5 kw, 5 minutes | 150 | 12767 |
| " 7 | " | 130 | 12185 |
| " 8 | Microwaves, 2.45 GHz, 0.5 kw, 8 minutes | 190 | 8746 |

*1: Rack obtained by a cutting process.

*2: Conventional rack (manufactured by extruding a resin to the shape of a rod, and then forming a rack on this rod).

*3: Since the quality of the rack was poor, the durability of the rack was not evaluated.

## Claims

1. Method of manufacturing racks of a theremoplastic resin, comprising the steps of heating a rod which includes a matric of a thermoplastic resin so that the temperature of at least the surface of said rod reaches a level within a range expressed by the equation

$$T-20° \leq \text{temperature of the surface of said rod} < T \quad (1)$$

(wherein T is the melting point of the matrix resin), and thereafter forming a rack in one or both surfaces of said rod by a toothed roller and a grooved guide roller which are paired with each other, or a pair of opposed toothed rollers.

2. A method as claimed in claim 1, wherein the rod is heated so that the temperature of at least the surface thereof reaches a level within a range expressed by the equation

$$T-10°C \leq \text{temperature of the surface of the rod} < T.$$

3. A method of manufacturing racks of a thermoplastic resin, comprising the steps of heating with microwaves a rod which includes a matrix of a thermoplastic resin so that the temperature of at least the surface of said rod does not exceed the melting point T of the matrix resin, and thereafter forming a rack in one or both surfaces of said rod by a toothed roller and a grooved guide roller which are paired with each other, or a pair of opposed toothed rollers.

4. A method as claimed in claim 3, wherein the rod is preheated before being heated with microwaves.

5. A method of manufacturing racks of a thermoplstic resin according to any preceding claim, wherein said toothed roller is heated to a temperature expressed by the equation,

$$T-50°C \leq \text{temperature of the surface of said rod} < T \quad (2)$$

(wherein T is the melting point of the matrix resin).

6. A method of manufacturing racks of a thermoplastic resin according to any preceding claim, wherein the pitch of the teeth of said rack being formed is adjusted by regulating the rotational speed of take-up rollers provided additionally on the downstream side of said toothed roller.

7. A method of manufacturing racks of a thermoplastic resin according to any preceding claim, wherein said thermoplastic resin contains a reinforcing material.

8. An apparatus for manufacturing racks of a thermoplastic resin, comprising a heater capable of heating a rod of a thermoplastic resin from the outside thereof, and a toothed rooler and a grooved guide roller which are paired with each other, or a pair of opposed toothed rollers.

9. An apparatus for manufacturing racks of a thermoplastic resin, comprising a microwave heater capable of heating a rod of a thermoplastic resin form the inside thereof and a toothed roller and a grooved guide roller which are paired with each other, or a pair of opposed rollers.

10. An apparatus for manufacturing racks of a thermoplastic resin as claimed in claim 8 or claim 9, which includes take-up rollers on the downstream side of said toothed roller.

Fig. 1

Fig. 2

Fig. 3

Fig. 4

Fig. 5 (a) (b)

Fig. 6

8 kg